# EUROPÄISCHE PATENTSCHRIFT

(11) **EP 3 535 170 B1**
(45) Veröffentlichungstag und Bekanntmachung des Hinweises auf die Patenterteilung: **25.08.2021**
(21) Anmeldenummer: 16797772.7
(22) Anmeldetag: 03.11.2016
(51) Int. Cl.: B60T 13/08

(54) **AUFLAUFBREMSBETÄTIGUNG FÜR SCHUBANHÄNGER MIT DEICHSEL UND RÄDERN**
OVERRUN BRAKE FOR TRAILER WITH TOW BAR AND WHEELS
FREIN A INERTIE POUR REMORQUE AVEC BARRE DE TRACTION ET ROUES

(43) Veröffentlichungstag der Anmeldung: 11.09.2019
(73) Patentinhaber: Thiel, Karl, 22763 Hamburg (DE); Seaside Concepts GmbH, 22301 Hamburg (DE)
(72) Erfinder: THIEL, Karl, 22763 Hamburg (DE)
(74) Vertreter: Eisenführ Speiser
(86) Internationale Anmeldenummer: PCT/EP2016/076566
(87) Internationale Veröffentlichungsnummer: WO 2018/082774

(56) Entgegenhaltungen:
- WO-A1-2012/095615
- DE-A1- 19 624 488
- DE-A1-102014 225 267
- DE-U1-202010 013 585
- DE-U1-202012 009 953

## Beschreibung

Die Erfindung betrifft eine Auflaufbremsvorrichtung für einen Schubanhänger, umfassend einen Antriebsmotor, der in dem Schubanhänger mit einer Stützkraft abgestützt ist und mit einem Antriebsrad des Schubanhängers zur Übertragung eines Antriebsdrehmoments drehmomentschlüssig gekoppelt ist, eine Deichsel, die zur Übertragung einer Schubkraft von dem Schubanhänger auf ein Lenkfahrzeug an einem ersten Ende eine Kupplungsvorrichtung zur Ankupplung an das Lenkfahrzeug aufweist und einem dem ersten Ende gegenüberliegenden zweiten Ende mit dem Schubanhänger gekoppelt ist, eine auf zumindest ein Rad des Schubanhängers einwirkende Bremseinheit, die mittels eines Bremsbetätigungselements betätigbar ist sowie einen Schubanhänger mit einer solchen Auflaufbremsvorrichtung. Ein zu dem Stand der Technik gehörendes Beispiel ist im Dokument DE 196 24 488 A1 offenbart.

Schubanhänger werden dazu eingesetzt, um das Zugfahrzeug mit einer Antriebskraft zu unterstützen, indem über die Deichsel, mit der der Schubanhänger an dem Zugfahrzeug angekoppelt ist, eine Antriebskraft von dem Schubanhänger auf das Zugfahrzeug übertragen wird. Solche Schubanhänger werden beispielsweise durch einen Elektromotor angetrieben, dessen Antriebsdrehmoment und dessen Antriebsdrehzahl in verschiedener Weise gesteuert werden kann, beispielsweise durch eine manuelle Steuerung vom Zugfahrzeug aus, durch eine proportionale Steuerung über die Antriebskraft am Zugfahrzeug selbst und dergleichen.

Mittels solcher Schubanhänger ist es auch möglich, größere Lasten zu transportieren. Bei einer solchen Einsatzweise ist es häufig nicht ausreichend, zur Verzögerung des Fahrzeugs mit Schubanhänger auf die Bremseinrichtungen des Zugfahrzeugs alleine zurückzugreifen. Eine für Anhänger bekannte Bremsunterstützungswirkung wird durch eine Auflaufbremse verwirklicht. Hierbei wird eine an einem Anhänger vorgesehene Bremsvorrichtung mechanisch betätigt, indem durch Auftreten einer Druckkraft in der Deichsel die Bremse betätigt wird.

Solche Auflaufbremsen können bei nicht angetriebenen Anhängern zuverlässig funktionieren, indem bei Auslösen des Bremsvorgangs am Zugfahrzeug der Anhänger aufgrund seiner Massenträgheit eine Schubkraft in die Deichsel einleitet und hierdurch auch die Bremseinrichtung am Anhänger betätigt wird.

Bei Einsatz solcher Auflaufbremsen an Schubanhängern kann die Auflaufbremse jedoch auch dann betätigt werden, wenn die Antriebskraft des Schubanhängers so groß ist, das sie nicht nur den Fahrwiderstand des Anhängers selbst ausgleicht, sondern auch eine Antriebsunterstützung über die Deichsel auf das Zugfahrzeug bewirkt, folglich also die Deichsel unter eine Schubkraft setzt. In diesem Falle würde durch die antriebsbedingte Schubkraft die Auflaufbremswirkung ausgelöst, was zu keiner sinnvollen Zusammenwirkung der Funktion der Auflaufbremse und des Schubanhängers bei Antriebunterstützung für das Zugfahrzeug führt.

Der Erfindung liegt die Aufgabe zugrunde, eine zuverlässige Bremsvorrichtung für Schubanhänger bereitzustellen.

Diese Aufgabe wird erfindungsgemäß mit einer Auflaufbremsvorrichtung der eingangs beschriebenen Art gelöst, bei der die Deichsel einen gegenüber einem lasttragenden Rahmengestell des Schubanhängers beweglichen, bremskraftübertragenden Deichselteil aufweist und dass die dem Antriebsdrehmoment an dem Antriebsrad entgegenwirkende Stützkraft des Antriebsmotors in Schubrichtung des Schubanhängers in diesen beweglichen bremskraftübertragenden Deichselteil der Deichsel eingeleitet wird und auf das Bremsbetätigungselement wirkt.

Die erfindungsgemäße Ausgestaltung ermöglicht es, bei einem Schubanhänger, der eine Antriebsunterstützung auf das Zugfahrzeug überträgt, eine Auflaufbremsvorrichtung einzusetzen und hierdurch wirksam und effizient die Verzögerung des Zugverbundes durch eine Bremswirkung an den Rädern des Schubanhängers zu erzeugen, bzw. zu unterstützen. Die Erfindung beruht dabei auf der Erkenntnis, dass durch eine einerseits ausgeführte Entkopplung der direkten Kraftübertragung zwischen dem lasttragenden Rahmengestell des Schubanhängers und der Deichsel eine Hebelwirkung und ein Hebelweg erzeugt werden kann, der für die Erzeugung der Bremskraft genutzt werden kann und andererseits einen Ausgleich bzw. eine Kompensation oder Sperrung dieses Hebelwegs erfolgen kann, indem die Stützkraft des Antriebsmotors, die dem Antriebsdrehmoment entgegensteht, ebenfalls auf die bremskraftübertragenden mechanischen Elemente aufgebracht wird. Hierdurch wird erreicht, dass bei Auftreten einer solchen Stützkraft, also bei Betrieb des Antriebsmotors zur Antriebsunterstützung des Zugfahrzeugs, die Auflaufbremse entkoppelt, deren Hebelweg kompensiert oder die Auflaufbremse gesperrt wird, indem diese Stützkraft eine entsprechende Hebelkraft und einen entsprechenden Hebelweg auf das Bremsbetätigungselement ausübt. Diese mechanisch übersetzte Wirkung der Stützkraft bewirkt daher bei Vorliegen einer entsprechenden Antriebsleistung, die folglich eine Antriebskraft und entsprechende Stützkraft hervorruft, eine Außerkraftsetzung der Auflaufbremswirkung, wodurch die Schubkraft über die Deichsel übertragen wird, ohne dass hierdurch eine Bremswirkung ausgelöst wird.

Wird demgegenüber eine Verzögerung des Verbundes aus Zugfahrzeug und Schubanhänger angestrebt, wird dies durch ein Abschalten der Antriebsfunktion des Antriebsmotors einerseits und Einleiten einer Bremsung andererseits herbeigeführt. Das Abschalten der Antriebswirkung des Antriebsmotors kann hierbei auf verschiedene Art und Weise erfolgen, beispielsweise kann eine mechanische Entkopplung zwischen Antriebsmotor und Antriebsrad bewirkt werden, der Antriebsmotor kann abgeschaltet werden, was durch eine entsprechende Steuerfunktion vom Zugfahrzeug, beispielsweise einen mit dem Bremsbetätigungshebel des Zugfahrzeugs gekoppelten elektrischen Schalter zur Abschaltung eines elektrischen Antriebs erfolgen kann, oder eine entsprechende Steuerung über eine Interaktion zwischen der Antriebseinrichtung des Zugfahrzeugs und des Schubfahrzeugs, die bei Entfall der Antriebsleistung am Zugfahrzeug auch einen Entfall der Antriebsleistung am Schubanhänger auslöst. Durch diesen Entfall der Antriebskraft durch den Antriebsmotor des Schubanhängers entfällt auch die Stützkraft, wodurch die Übertragung der Hebelkraft und des Hebelwegs auf das Bremsbetätigungselement in solcher Weise entfällt, bzw. umgekehrt wird, dass die Bremseinrichtung des Schubanhängers aktiviert und durch eine Auflaufkraft des Schubanhängers über die Deichsel in Kraft gesetzt werden kann.

Mit der erfindungsgemäßen Auflaufbremsvorrichtung wird daher eine in Abhängigkeit des Bestehens einer Antriebskraft am Antriebsmotor eines Schubanhängers erfolgende mechanische Aufhebung, bzw. Sperrung der Bremskraft und ein entsprechender Entfall dieser Aufhebung, bzw. Sperrung bewirkt und hierdurch ermöglicht, dass über die Schubkraft an der Deichsel bei Vorliegen einer Antriebskraft keine Bremswirkung an der Bremseinrichtung des Schubanhängers ausgelöst wird und bei Nichtvorliegen einer solchen Antriebskraft über diese Schubkraft eine Bremswirkung an der Bremseinrichtung des Schubanhängers ausgelöst wird.

Unter der Stützkraft des Antriebsmotors, die dem Antriebsdrehmoment an dem Antriebsrad entgegenwirkt, ist hierbei eine durch die Schubwirkung des Antriebsmotors erzeugte Kraft zu verstehen. Diese Kraft kann einerseits über eine separate Drehmomentstütze aufgenommen und entsprechend auf das Bremsbetätigungselement eingeleitet werden, in einer anderen Ausgestaltung kann diese Stützkraft mittels der in die Deichsel übertragenen Antriebskraft aufgenommen und auf das Bremsbetätigungselement eingeleitet werden. Sowohl bei der einen wie auch bei der anderen Ausgestaltung erfolgt die Übertragung auf einem Kraftübertragungsweg, der nicht dem Kraftübertragungsweg entspricht, über den die Massenträgheitskraft des Schubanhängers bei Auflaufen des Schubanhängers infolge einer Bremsung stattfindet. Durch diese Entkopplung ist die alternative Übertragung der Antriebskraft oder der die Bremswirkung auslösenden Massenträgheitskraft sichergestellt.

Gemäß einer ersten bevorzugten Ausführungsform umfasst das Bremsbetätigungselement eine Betätigungsabstützung und ein Betätigungselement, von denen das eine an dem lasttragenden Rahmengestell und das andere an dem Deichselteil befestigt ist, wobei durch die Einleitung der Stützkraft in den Deichselteil die Betätigungsabstützung und das Betätigungselement so gegeneinander bewegt werden, dass die Bremseinheit gelöst wird und ohne Einleitung der Stützkraft in den Deichselteil die Betätigungsabstützung und das Betätigungselement so gegeneinander bewegt werden, dass die Bremseinheit in Bremswirkung gespannt wird. Gemäß dieser Ausführungsform wird durch die Einleitung der Stützkraft eine Lösung der Bremseinrichtung am Schubanhänger bewirkt, indem eine Relativbewegung zwischen einer Betätigungsabstützung und einem Betätigungselement der Bremseinheit in einer lösenden Richtung durch die Stützkraft ausgeübt wird. Demgegenüber wird bei dieser Ausführungsform bei Entfall der Stützkraft eine Bewegung des Betätigungselementes und der Betätigungsabstützung in einer hierzu entgegengesetzten Richtung bewirkt und hierdurch die Lösung aufgehoben, bzw. die Bremswirkung hervorgerufen, wobei zu verstehen ist, dass diese Bremswirkung durch eine Verstärkung der Auflaufkraft in der Deichsel noch weiter verstärkt wird.

Dabei ist es besonders bevorzugt, dass ohne Einleitung der Stützkraft in den Deichselteil und bei Einwirken einer Auflaufkraft zwischen Schubanhänger und Lenkfahrzeug auf den Deichselteil die Betätigungsabstützung und das Betätigungselement so gegeneinander bewegt werden, dass die Bremseinheit in Bremswirkung gespannt wird, wodurch eine Verstärkung der Bremswirkung in Abhängigkeit der Auflaufkraft erzeugt wird.

Gemäß einer weiteren bevorzugten Ausführungsform ist vorgesehen, dass der Wechsel zwischen Einleiten der Stützkraft auf den Deichselteil und Entfall dieser Stützkraft auf den Deichselteil eine Relativbewegung zwischen dem Deichselteil und dem lasttragenden Rahmengestell bewirkt. Diese Ausführungsform macht in einfacher Weise eine Kopplung zwischen der Stützkraft-abhängigen Relativbewegung zwischen Deichselteil und Rahmengestell einerseits und Auflaufbrems-abhängiger Relativbewegung von dem Rahmengestell auf die Deichsel möglich und entkoppelt hierdurch zuverlässig die Antriebswirkung von der Bremswirkung.

Noch weiter ist es bevorzugt, dass der Wechsel zwischen Einleiten der Stützkraft auf den Deichselteil und Einwirken einer Auflaufkraft zwischen Schubanhänger und Lenkfahrzeug auf den Deichselteil eine Relativbewegung zwischen dem Deichselteil und dem lasttragenden Rahmengestell bewirkt. Gemäß dieser Ausführungsform wird die Relativbewegung nicht durch das Einleiten oder den Entfall der Stützkraft bewirkt, wie zuvor beschrieben, sondern durch das Einleiten der Stützkraft einerseits und das Einwirken einer Auflaufkraft andererseits. Auch hierbei wird eine zuverlässige Entkopplung zwischen Bremswirkung und Antriebswirkung erreicht.

Noch weiter ist es dabei bei beiden Varianten bevorzugt, wenn das Bremsbetätigungselement eine Betätigungsabstützung und ein Betätigungselement umfasst, von denen das eine an dem lasttragenden Rahmengestell und das andere an dem Deichselteil befestigt ist und dass durch die Relativbewegung zwischen Rahmengestell und Deichselteil die Betätigungsabstützung und das Betätigungselement relativ zueinander bewegt werden. Durch die Anordnung des Betätigungselementes einerseits und der Betätigungsabstützung andererseits am Rahmengestell und am Deichselteil, kann die hervorgerufene Relativbewegung verlässlich in die gewünschte Bremswirkung bzw. Aufhebung der Bremswirkung umgesetzt werden, indem eine entsprechende Hin- und Herbewegung in Abhängigkeit des Vorhandenseins einer Stützkraft oder Nichtvorhandenseins einer Stützkraft bzw. Einwirken einer Auflaufkraft hierzu benutzt wird. Zugleich kann bei dieser Ausgestaltung in einfacher Weise eine solche Relativbewegung für die Bremsbetätigung genutzt werden, was den Einsatz konventioneller Bremsen wie hydraulischer oder mechanisch betätigter Bremsen ermöglicht. Dabei ist es besonders bevorzugt, wenn das Betätigungselement einen Befestigungspunkt für ein Zugelement eines Bowdenzuges umfasst und die Betätigungsabstützung einen Befestigungspunkt für eine Hülle des Bowdenzuges umfasst. Diese Ausführungsform ermöglicht eine einfache Bowdenzugbetätigte Bremsauslösung, indem Zugpunkt und Gegenlager des Bowdenzugs als Betätigungselement und Betätigungsabstützung eingesetzt werden.

Noch weiter ist es bevorzugt, dass die Deichseleinheit über eine Schwenklagerung, insbesondere eine mittels doppelter Parallelogramm-Schwenklagerung, bei der die Schwingensysteme in einem Winkel zueinander verlaufen, an dem lasttragenden Rahmengestell befestigt ist. Eine solche Parallelogramm-Schwenklagerung ermöglicht eine präzise axiale Führung der Deichseleinheit bei gleichzeitig wirksamer Aufnahme von Auflaufkraft und Stützkraft.

Dabei ist es besonders bevorzugt, wenn das Antriebsrad an der Deichseleinheit befestigt und drehbar gelagert ist. Gemäß dieser Ausführungsform wird die Antriebskraft des Antriebsrads über die Deichseleinheit eingeleitet und dient hierbei durch entsprechende Einwirkung der Antriebsschubkraft auf die Deichseleinheit zur Sperrung bzw. Kompensation einer etwaigen Bremswirkung.

Gemäß einer hierzu alternativen Ausführungsform ist vorgesehen, dass das Antriebsrad an dem Rahmengestell befestigt und drehbar gelagert ist und mittels einer Drehmomentstütze an der Deichseleinheit gegen das Antriebsdrehmoment abgestützt ist. Gemäß dieser Ausführungsform kann die Stützkraft über eine separate Drehmomentstütze aufgenommen werden, die das Antriebsmoment des Antriebsmotors kontert. Diese Drehmomentstütze kann entsprechend angekoppelt werden, um die bremskraftaufhebende, bzw. -sperrende Wirkung bei Schubantriebsfunktion herbeizuführen.

Noch weiter ist es dabei bevorzugt, wenn die Drehmomentstütze als Hebel ausgeführt ist, der eine Hebellänge aufweist, die kürzer ist als der Radius des Antriebsrades. Durch diese Ausgestaltung mit unterschiedlichen Hebellängen des Antriebsrades einerseits und der Drehmomentstütze andererseits wird eine Kraftuntersetzung der Antriebskraft herbeigeführt, die zu einer zuverlässigen Aufhebung bzw. Sperrung der Bremswirkung bei Vorliegen einer Antriebskraft führt.

Noch weiter ist es bevorzugt, wenn das Bremsbetätigungselement ohne Einleitung der Stützkraft in den Deichselteil und bei Einwirken einer Auflaufkraft zwischen Schubanhänger und Lenkfahrzeug auf den Deichselteil eine Bremsbetätigungskraft auf die Bremseinheit ausübt und dass eine Einstellvorrichtung zur Einstellung eines Übersetzungsverhältnisses zwischen der Auflaufkraft und der Bremsbetätigungskraft bereitgestellt ist. Eine solche Einstellvorrichtung kann beispielsweise darin realisiert sein, dass die Hebelverhältnisse durch Verlängerung oder Verkürzung eines Hebels oder Verschiebung eines Anlenkpunktes entlang eines Hebels so eingestellt werden können, dass eine gewünschte Kraft und ein gewünschter Weg für die Bremsbetätigung am Schubanhänger eingestellt werden kann. Hierdurch wird es möglich, unterschiedliche Bremssysteme mit der erfindungsgemäßen Auflaufbremsvorrichtung einzusetzen und hierbei bei gegebener Auflaufkraft eine für ein jeweiliges Bremssystem erforderliche Bremsbetätigungskraft und einen erforderlichen Bremsbetätigungsweg zu erzeugen.

Noch weiter ist es bevorzugt, wenn die drehmomentschlüssige Kopplung zwischen dem Antriebsmotor und dem Antriebsrad mittels einer Reibrad-Gegenrad Kraftkopplung ausgeführt ist und das Reibrad auf einer Wippe oder einem Schwenkhebel gelagert ist, die durch die auf das Deichselteil wirkende Antriebsschubkraft mittels einer Hebelkraft solcherart verschwenkt wird, dass die Anpresskraft zwischen Reibrad und Gegenrad, insbesondere zwischen Reibrad und Antriebsrad, erhöht wird. Gemäß dieser Ausführungsform wird mittels der Ankopplung des Antriebsmotors nicht nur eine Sperrung bzw. Aufhebung der Bremskraft bei Schubantrieb bewirkt, sondern darüber hinaus auch eine Erhöhung der Anpresskraft eines Reibrades an ein Gegenrad bewirkt. Diese zweiseitige Wirkung wird durch eine Lagerung des Reibrades auf einer entsprechenden Wippe oder einem Schwenkhebel bewirkt, was in Abhängigkeit der proportional zur Stützkraft hervorgerufenen Antriebschubkraft eine stärkere Anpressung bewirkt und bei Entfall der Stützkraft bzw. Antriebsschubkraft eine entsprechende Rücknahme dieser Anpresskraft bewirkt. Hierdurch wird einerseits ermöglicht, die Anpresskraft in Abhängigkeit des zu übertragenden Drehmoments zu erhöhen, hierdurch eine gut angepasste Anpresskraft einzustellen und beispielsweise dann, wenn als Gegenrad das Antriebsrad selbst dient, eine Walkarbeit dieses Antriebsrades auf ein erforderliches Maß zu begrenzen. Zudem wird durch diese Doppelfunktion ein Durchrutschen der reibkraftschlüssigen Drehmomentübertragung vom Reibrad auf das Gegenrad verhindert und gegebenenfalls weiterhin eine gute Dosierung der Bremskraft durch Rücknahme der Anpresskraft bei Einleiten einer Bremsung ermöglicht.

Dabei ist es besonders bevorzugt, wenn die Wippe oder der Schwenkhebel mit dem Deichselteil gekoppelt ist zum Verringern des Anpressdrucks zwischen Reibrad und Gegenrad bei Reduzierung der Antriebsschubkraft.

Ein weiterer Aspekt der Erfindung ist ein Schubanhänger mit einer Auflaufbremsvorrichtung, die gemäß der voranstehenden Funktionsbeschreibung ausgeführt ist.

Der Schubanhänger kann fortgebildet werden durch genau ein Antriebsrad und gegebenenfalls ein weiteres nicht angetriebenes Rad, das axial beabstandet zum Antriebsrad am Rahmengestell drehbar gelagert ist, wobei das zweite Ende der Deichseleinheit mit der Lagerung des Antriebsrades, insbesondere der Drehmomentstütze des Antriebsmotors verbunden ist. Bei dieser Ausführungsform wird die Stützkraft lediglich an einem Antriebsrad des Schubanhängers abgegriffen, was beispielsweise bei Schubanhängern mit lediglich einem Rad verwirklicht sein kann, ebenso aber auch bei Schubanhängern mit zwei oder mehr Rädern, die über entsprechend mitlaufende, nicht angetriebene Räder zusätzlich verfügen.

Alternativ hierzu kann der Schubanhänger auch fortgebildet werden durch genau zwei axial voneinander beabstandete Antriebsräder, wobei das zweite Ende der Deichseleinheit als gegabeltes Ende ausgebildet ist und mit den Lagerungseinheiten beider Antriebsräder, insbesondere der Drehmomentstütze des jeweiligen Antriebsmotors verbunden ist. Bei dieser Ausführungsform wird die Stützkraft über eine Deichseleinheit aufgenommen, die mit beiden Antriebsrädern entsprechend gekoppelt ist, insbesondere mit der Drehmomentstütze eines Antriebsmotors, bzw. den beiden Lagerungseinheiten der Antriebsräder.

Bevorzugte Ausführungsformen der Figuren werden anhand der beiliegenden Figuren beschrieben. Es zeigen:
- Figur 1: eine schematische, perspektivische Ansicht einer ersten Ausführungsform der Erfindung,
- Figur 2: eine schematische Darstellung eines Ausschnitts aus Figur 1,
- Figur 3: eine schematische, perspektivische Darstellung einer zweiten Ausführungsform der Erfindung, und
- Figur 4: eine schematische Seitenansicht einer dritten Ausführungsform der Erfindung.

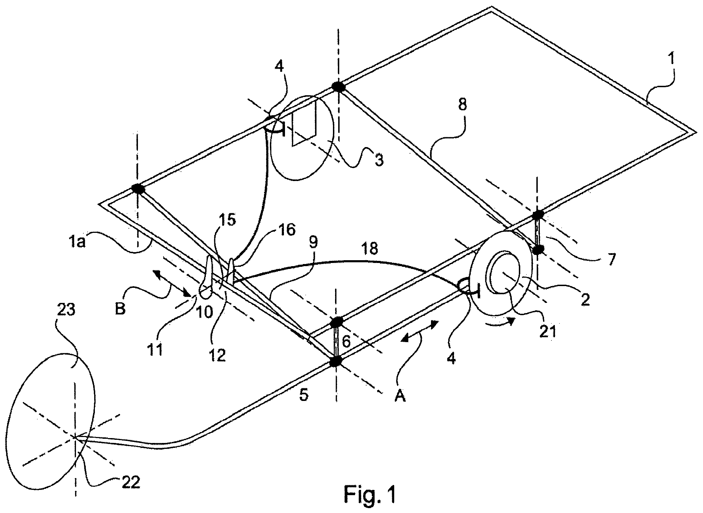

Bezugnehmend zunächst auf Figur 1 umfasst ein Schubanhänger mit einer erfindungsgemäßen Bremsvorrichtung, einen Rahmen 1, der als lastaufnehmendes Rahmengestell dient. An dem Rahmen 1 sind zwei Streben 6, 7 schwenkbar befestigt, die als Vertikalstreben ausgeführt sein können. Diese Streben 6, 7 sind wiederum an ihrem dem Befestigungspunkt am Rahmen 1 gegenüberliegenden Ende gelenkig mit einer Deichsel 5 verbunden und binden daher die Deichsel 5 nach Art einer Parallelogrammführung an den Rahmen 1 an.

Im gezeigten Ausführungsbeispiel ist ein Antriebsrad 2 auf einer Seite des Rahmens 1 angeordnet und ein mitlaufendes, nicht angetriebenes Rad 3 auf der hierzu gegenüberliegenden Seite des Rahmens 1 angeordnet. Das mitlaufende Rad 3 ist in einer Lagerungseinheit unmittelbar am Rahmen 1 drehbar befestigt. Das angetriebene Rad 2, das beispielsweise über einen Nabenmotor 21 verfügen kann, ist an der Deichsel 5 befestigt und drehbar gelagert. Es leitet die Antriebskraft daher über die Deichsel 5 auf eine am Ende der Deichsel 5 angeordnete Anhängerkupplung 22 ein und kann hierdurch eine Schubkraft auf diese Anhängerkupplung 22 und das daran angekoppelte Zugfahrzeug ausüben.

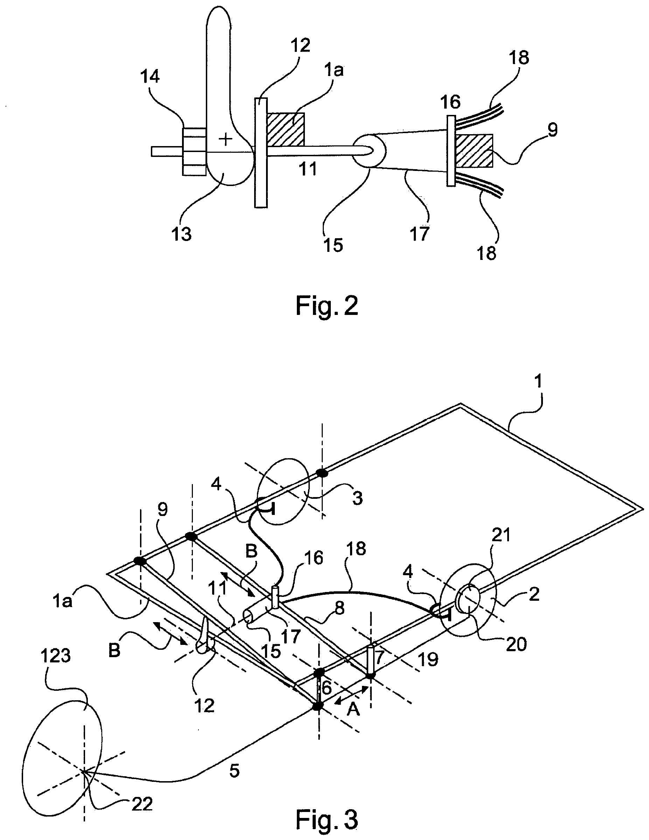

Zwischen dem Rahmen 1 und der Deichsel 5 erstrecken sich weiterhin Horizontalstreben 8, 9. Diese Horizontalstreben sind einerseits an der gegenüberliegenden Seite des Rahmen 1, andererseits an der Deichsel 5 gelenkig befestigt. An der vorderen Horizontalstrebe 9 ist eine Abstützungseinrichtung 16 befestigt, die in Form eines Seilhüllenwiderlagers eines Bowdenzugs ausgeführt ist. Diese Abstützungseinheit dient der Abstützung der Seilhüllen von Bowdenzügen 18, die zu zwei Bremszangen 4 am mitlaufenden Rad 3 und am Antriebsrad 2 verlaufen. Die Bremskraft wird durch eine Bremsstange 11 übertragen, die sich an einer vorderen Rahmenstrebe 1a des Rahmen 1 abstützt. Die Bremsstange 11 verteilt über eine Seilrolle 15 die Bremskraft auf ein Bremsseil 17 (siehe Fig. 2), das in den Seilhüllen der Bowdenzüge 18 geführt ist. Durch diese Wechselwirkung der Abstützungseinheit an der Horizontalstrebe 9 und der Befestigung der Bremsstange am Rahmen 1 wird bei einer durch Abschalten des Antriebs am Antriebsrad 2 hervorgerufenen und gegebenenfalls durch eine Massenträgheitsbewegung des Rahmens 1 relativ zur Deichsel in Richtung auf die Anhängerkupplung 22 zu bewirkten Relativbewegung zwischen Deichsel 5 und Rahmen 1 die Horizontalstrebe 9 solcher Art verschoben, dass eine Zugkraft über das Bremsseil 17 aufgebracht wird, indem das Seilhüllenwiderlager an der Horizontalstrebe 9 nach hinten entgegen der Fahrtrichtung verschoben wird. Hierdurch wird folglich bei Einwirkung einer Schubkraft in Folge einer Bremswirkung des Zugfahrzeugs und/oder eines Entfalls der Antriebsleistung am Antriebsrad 2 die Bremsung über die Bremszangen 4 eingeleitet beziehungsweise ermöglicht.

Wird hingegen der Antriebsmotor 21 angetriebenen, so wird diese Antriebskraft direkt in die Deichsel eingeleitet und das Rahmengestell 1 der Deichsel gegenüber nach hinten verschwenkt. Diese Bewegung löst die Bremswirkung.

Der Befestigungspunkt des Seilhüllenwiderlagers 16 an der Horizontalstrebe 9 und der Bremsstange an der vorderen Rahmenstrebe 1a kann hierbei seitlich verschoben werden. Je weiter dieser Befestigungspunkt an die Anlenkpunkte der horizontalen Rahmenstrebe 9 an dem Rahmen 1 verschoben wird, desto geringer ist der Weg, der am Seilzug durch eine Relativbewegung der Horizontalstreben zum Rahmen ausgelöst wird. Je weiter die Befestigungspunkte des Seilhüllenwiderlagers 16 und der Bremsstange 18 an der Horizontalstrebe 9 beziehungsweise der vorderen Rahmenstrebe 1a zu den Anlenkpunkten der Horizontalstrebe an der Deichsel 5 verschoben werden, desto größer wird dieser Weg. Hierdurch lässt sich die erfindungsgemäße Bremsvorrichtung auf verschiedene Bauarten und Hebelverhältnisse von Bremsanlagen an den Rädern anpassen.

Der Rahmen 1 ist gegenüber der Deichsel 5 in Längsrichtung beweglich gelagert und wird durch vordere 6 und hintere 7 vertikale sowie durch vordere 9 und hintere 8 horizontale Schwingenstreben geführt. Die vertikalen Streben 6, 7 bilden hierbei eine erste Parallelogrammführung und die horizontalen Schwingenstreben 8, 9 eine zweite Parallelogrammführung. Zusammen ergibt sich hierdurch eine doppelte Parallelogramführung, deren Schwingensysteme in einem Winkel zueinander verlaufen, zwischen dem Rahmengestell 1 und der Deichsel 5. Die Achse des angetriebenen Rades 2 wird von der durchgehend starren Deichsel 5 gehalten und überträgt den Schub direkt auf das Führungsfahrzeug. Dabei wird das auf der vorderen horizontalen Schwingenstrebe 9 befindliche Seilhüllenwiderlager 16 entlastet und die Bremszangen 4 gelöst. Ein vorderer Anschlag überträgt die Antriebskraft auf den Rahmen 1. Das Einleiten der Vortriebskraft über die Deichsel 5 verhindert das Auslösen der Bremse während der Antriebsphase.

Beim Bremsen verschiebt sich der Rahmen 1 mitsamt Ladung gegenüber der Deichsel 5 nach vorn und betätigt durch sein Massenträgheitsmoment über das Bremsseil 17 (siehe Fig. 2) die Bremszangen 4. Die Bremszange 4 des antreibenden Rades 2 ist auf der Deichsel 5 montiert, die des geschleppten Rades 3 am Rahmen 1. Werden zwei Antriebsräder verwandt, so ist die Deichsel 5 als Rahmenkonstruktion über die ganze Fahrzeugbreite auszuführen um zuverlässig den Schub beider Räder in die Deichsel 5 einleiten zu können. Bei einseitigem Antrieb genügt Montage des geschleppten Rades 3 am Rahmen 1.

Auch für mehrachsige Anhänger gilt das oben dargestellte sinngemäß, nämlich dass die Deichsel 5 über den mit ihr verbundenen Fahrschemel kraftschlüssig angetrieben und der Rest des Fahrzeugs damit beweglich verbunden wird um damit die Auflaufbremsfunktion darstellen zu können und die Betätigung der Bremse durch den Antrieb zu verhindern.

Figur 3 zeigt eine zweite Ausführungsform der Erfindung, bei der ein angetriebenes Rad 2 direkt an dem Rahmen 1 befestigt und drehbar gelagert ist. Bei dieser Ausführungsform wird ein Nabenmotor 21, der das Antriebsrad 2 antreibt, mittels einer Drehmomentstütze 20, die sich ausgehend vom Nabenmotor nach unten erstreckt und mit dem Stator des Nabenmotors drehmomentfest gekoppelt ist, abgestützt. Die Drehmomentstütze 20 dient hierbei als Reaktionsmomenthebel und ist hinsichtlich ihrer mechanischen Kopplung parallel zu den Streben 6, 7 angeordnet. Die Drehmomentstütze 20 ist gelenkig an der Deichsel 5 befestigt, sodass auch bei dieser Ausführungsform eine direkte Einleitung der Antriebskraft über die Drehmomentstütze 20 auf die Deichsel 5 erfolgt und diese hierbei eine Entlastung des Bremshüllenwiderlagers 16 bewirkt und folglich keine Einleitung von Bremskraft auslöst. Die Drehmomentstütze 20 erstreckt sich hierbei ausgehend von ihrem Befestigungspunkt am Nabenmotor 21 nach unten und weist eine Hebellänge auf, die kürzer ist als der Durchmesser des Antriebrades 2. Da das Drehmoment am Antriebsrad und der Drehmomentstütze gleich hoch ist, ist die am Ende der Drehmomentstütze 20 auf die Deichsel 5 einwirkende Kraft daher größer als die von dem Antriebsrad 2 auf die Fahrbahnoberfläche übertragende Kraft aufgrund der unterschiedlichen Hebellängen. Hierdurch wird die Bremsentlastung zwischen Widerlager 16 und Bremsstange 11 zuverlässig bewirkt.

Figur 2 zeigt eine Seitenansicht eines Details der Befestigung der Bremsstange 11 an der vorderen Rahmenstrebe 1a und der Abstützungseinheit 16 in Form des Bremshüllenwiderlagers an der Horizontalstrebe 9. Wie ersichtlich, ist eine Einstellmutter 14 vorgesehen, um die Bremsstange 11 vorzuspannen und hierdurch eine Justierung des Nullpunktes der Bremseinrichtung herbeizuführen. Weiterhin ist ein Exzenterhebel 13 vorgesehen, mit dem eine Feststellbremswirkung durch manuelles Verspannen der Bremsstange 11 gegenüber dem Widerlager 16 erfolgen kann. Das Seilhüllenwiderlager 16 ist an der Horizontalstrebe 9 in horizontaler Richtung verschiebbar, entsprechend ist das Widerlager 12 an der vorderen Rahmenstrebe 1a in horizontaler Richtung entlang der Rahmenstrebe 1a verschieblich.

Der Rahmen 1 nimmt alle Funktionsteile des Anhängers sowie die zu transportierende Last auf.

Ein Nabenmotor 21 -getriebenes Rad 2 sowie ein geschlepptes Rad 3 stellen den Fahrbahnkontakt her.

Eine Anhängerkupplung 22 in Höhe der Achse des Hinterrads des Zugfahrzeuges 23 stellt die kraftschlüssig bewegliche Verbindung zur Tiefdeichsel her und überträgt Schub und Zugkräfte.

Die Verbindung des Rahmens 1 mit der Deichsel 5 erfolgt über gelenkig mit beiden verbundenen Vertikalstreben 6, 7 als auch Horizontalstreben 8, 9.

Diese Ausführung hat gegenüber sonst häufig verwendeten Teleskoprohren den Vorteil, dass während des Betriebes auftretende Knick- (Gier) und Nick- (Stampf) Momente reibungsärmer aufgefangen werden, und ein Blockieren durch Verkanten des Teleskops nicht auftritt.

An der vorderen Rahmenstrebe 1a befindet sich seitlich verschiebbar angebracht das Widerlager 12 für die Bremsseilbetätigung. Über eine Bremsstange 11 mit Gewinde wird mittels Einstellmutter 14 das Bremsspiel eingestellt, ein zwischengelagerter Exzenterhebel 13 dient als Feststellbremsbetätigung. Das Bremsseil 17 läuft von einem Bremskörper 4 zum anderen über eine Seilrolle 15 und durch Seilhüllen 18, die sich am Seilhüllenwiderlager 16 und an den Bremskörpern 4 abstützen. Auch dieses Widerlager ist seitlich verschiebbar montiert und zwar auf der vorderen horizontalen Schwingenstrebe 9.

Die Verwendung eines einzigen Bremsseiles 17 welches über eine Seilrolle 15 läuft ermöglicht die Verwendung einer einzigen Einstellmutter 14 nebst Exzenterhebel 13 für beide Bremszangen 4.

Die seitliche Verschiebbarkeit der Bremswiderlagerplatte 12 sowie des Seilhüllenwiderlagers 16 ermöglicht die Einstellung des Übersetzungsverhältnisses Bremsauflaufkraft an der Deichsel zu Bremsbetätigungskraft an den Bremszangen 4. Diese Verstellbarkeit ist erforderlich wenn am Markt erhältliche Fahrradbremsen verwendet werden. Eine Fahrradbremse stellt ein System aus Betätigungselement (Bremshebel) und Bremskörper (Bremszange) dar mit genau für diesen Zweck abgestimmtem Verhältnis von Bremsauslösekraft (Handhebel) zu Bremsbetätigungskraft (Bremszange). Wird nun der Handhebel durch die Auflaufbremsbetätigung ersetzt, muss das Verhältnis von Auflaufkraft zu Bremswirkung durch diese konstruktive Maßnahme abgestimmt werden.

Das Zusammenspiel von Motor und Bremse:

### Im Schubbetrieb

Der Nabenmotor 21 treibt das Fahrzeug an. Dabei entspricht die Schubkraft, die auf die Deichsel 5 und das Zugfahrzeug wirkt, genau der Vortriebskraft am Reifenumfang des angetriebenen Rades 2. Da der Reaktionsmomenthebel 20 kürzer ist als der Radradius, ist die Abstützkraft um das Verhältnis Radhalbmesser zu Länge Reaktionsmomenthebel 20 größer als die Vortriebskraft, verriegelt zuverlässig die Deichsel 5 in der vorderen Stellung und verhindert das Auslösen der Bremse.

### Im Bremsbetrieb

Beim Auslösen der Bremse wird der Motor ausgeschaltet und das Reaktionsmoment bricht zusammen. Nun kann beim Bremsen des Zugfahrzeugs sich der Rahmen 1 des Anhängers gegenüber der Deichsel 5 nach vorn verschieben und durch die Bewegung der vorderen horizontalen Schwingenstrebe 9 die Bremszangen 4 betätigt werden. Während des Bremsens erhöht sich die Stützlast auf der Deichselkupplung 22 wodurch auch die Bodenhaftung des Hinterrades vom Zugfahrzeug erhöht wird und das Blockieren der dort befindlichen Bremse vermieden wird, sodass die Bremsleistung des Gespanns erhöht wird.

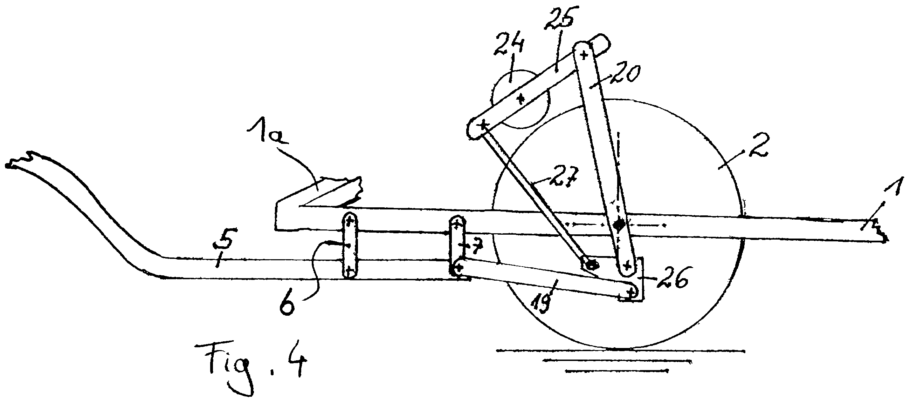

Figur 4 zeigt eine weitere Ausführungsform der Erfindung, bei der die Antriebskraft auf das Antriebsrad 2 mittels einer Reibrolle 24 übertragen wird. Die Reibrolle 24 kann koaxial mit einem Reibrollenmotor ausgeführt sein, der die Reibrolle 24 direkt antreibt. Die Reibrolle 24 ist auf einem als Wippe oder Schwenkhebel ausgeführten Motorhalter 25 montiert. Der Motorhalter 25 ist hierbei einerseits mit einem Reaktionsmomenthebel 20, der zur Abstützung des Drehmoments dient, gekoppelt, an dem gegenüberliegenden Ende ist der Motorhalter 25 mit einer Zugstrebe 27 gekoppelt. Zugstrebe 27 und Reaktionsmomenthebel 20 bilden gemeinsam mit dem Motorträger 25 und einem Kniehebel 26 eine kraftschlüssige Hebelanordnung. Der Reaktionsmomenthebel 20 ist am Rahmen 1 schwenkbar gelagert, wobei der Hebelweg zwischen dem Lagerungspunkt des Reaktionsmomenthebels 20 am Rahmen 1 zu dem Kniehebel 26 kürzer ist als der Hebelweg von dem Lagerungspunkt des Reaktionsmomenthebels 20 am Rahmen 1 zu dem Gelenkverbindungspunkt zwischen dem Reaktionsmomenthebel 20 und dem Motorträger 25.

Der Kniehebel 26 ist weiterhin über eine Reaktionsmomentstrebe 19 mit der Deichsel 5 verbunden, die in bekannter Weise über Vertikalstreben 6, 7 mit dem Rahmen 1 gelenkig verbunden ist.

Die in Figur 4 gezeigte Ausführungsform ermöglicht es, die als Nachrüstantriebe beliebten Reibrollenantriebe einzusetzen und mit der erfindungsgemäßen Bremsvorrichtung zu kombinieren. Dabei wird die Ankopplung über den Reaktionsmomenthebel 20 gleichzeitig dazu genutzt, um die Anpresskraft der Reibrolle 24 an das Antriebsrad 2 in Abhängigkeit des übertragenen Drehmoments proportional dazu zu erhöhen beziehungsweise zu verringern.

Um während des Motorbetriebes die Bremsfunktion zu sperren wird der Reaktionsmomenthebel 20, zweckmäßigerweise als das motorgetriebene Rad 2 umschließenden Bügel ausgeführt, von der Reibrolle 24 über den Motorhalter 25 entgegen der Drehrichtung des motorgetriebenen Rades 2 nach hinten gedrückt. Die Figur zeigt eine koaxiale Lagerung des Reaktionsmomenthebels 20 auf der Radachse, jedoch ist auch eine versetzte Lagerung am Rahmen 1 möglich. Somit wird der untere Teil des Hebels nach hinten gedrückt und über den Kniehebel 26 sowohl die Reaktionsmomentstrebe 19 zur Sperrung der Bremsfunktion als auch die Zugstrebe 27 zur Verstärkung des Anpressdruckes Reibrollenmotor 24 auf den Reifen des motorgetriebenen Rades 2 betätigt. Mit dieser Anordnung wird einerseits die Sperrung der Bremse wahrend des Antriebes als auch die Bremsfunktion im antriebslosen Zustand sichergestellt sowie andrerseits ein dem jeweiligen Fahrzustand angemessener Anpressdruck des Reibrollenmotors 24 gewährleistet. Das bedeutet viel Druck bei großem Vortrieb um Schlupf zu vermeiden und geringen Druck bei kleinem Vortrieb um die Walkarbeit zu verringern und den Wirkungsgrad zu verbessern.

### Bezuqszeichenliste

- (1): Rahmen (Chassis)
- (1a): vordere Rahmenstrebe
- (2): Motorgetriebenes Rad
- (3): geschlepptes Rad
- (4): Bremszange
- (5): Tiefdeichsel mit beweglicher Schwinge
- (6): vordere vertikale Schwingenstrebe
- (7): hintere vertikale Schwingenstrebe
- (8): hintere horizontale Schwingenstrebe
- (9): vordere Horizontale Schwingenstrebe
- (10): Bremswiderlager seitlich verstellbar
- (11): einstellbare Bremsstange
- (12): Widerlagerplatte seitlich verstellbar
- (13): Exzenterhebel als Feststellbremse
- (14): Einstellmutter
- (15): Seilrolle
- (16): Widerlager für Seilhüllen seitlich verstellbar
- (17): Bremsseil
- (18): Seilhülle
- (19): Reaktionsmomentstrebe
- (20): Reaktionsmomenthebel
- (21): Nabenmotor
- (22): Anhängerkupplung für Tiefdeichsel
- (23): Hinterrad des Zugfahrzeugs
- (24): Reibrollenmotor
- (25): Motorhalter
- (26): Kniehebel
- (27): Zugstrebe

- A: Arbeitsrichtung von Reaktionsmomentstrebe und Deichsel
- B: Verstellbarkeit der Bremswiderlager

## Patentansprüche

1. Auflaufbremsvorrichtung für einen Schubanhänger, umfassend einen Antriebsmotor (21), der in dem Schubanhänger mit einer Stützkraft abgestützt ist und mit einem Antriebsrad des Schubanhängers zur Übertragung eines Antriebsdrehmoments drehmomentschlüssig gekoppelt ist, eine Deichsel (5), die zur Übertragung einer Schubkraft von dem Schubanhänger auf ein Lenkfahrzeug an einem ersten Ende eine Kupplungsvorrichtung zur Ankupplung an das Lenkfahrzeug aufweist und einem dem ersten Ende gegenüberliegenden zweiten Ende mit dem Schubanhänger gekoppelt ist,
eine auf zumindest ein Rad des Schubanhängers einwirkende Bremseinheit, die mittels eines Bremsbetätigungselements betätigbar ist,
**dadurch gekennzeichnet, dass**
die Deichsel einen gegenüber einem lasttragenden Rahmengestell des Schubanhängers beweglichen, bremskraftübertragenden Deichselteil aufweist und dass die dem Antriebsdrehmoment an dem Antriebsrad entgegenwirkende Stützkraft des Antriebsmotors in Schubrichtung des Schubanhängers in diesen beweglichen, bremskraftübertragenden Deichselteil der Deichsel eingeleitet wird und auf das Bremsbetätigungselement wirkt.

2. Auflaufbremsvorrichtung nach Anspruch 1,
**dadurch gekennzeichnet, dass** das Bremsbetätigungselement eine Betätigungsabstützung und ein Betätigungselement umfasst, von denen das eine an dem lasttragenden Rahmengestell und das andere an dem Deichselteil befestigt ist, und dass
- durch die Einleitung der Stützkraft in den Deichselteil die Betätigungsabstützung und das Betätigungselement so gegeneinander bewegt werden, dass die Bremseinheit gelöst wird, und
- ohne Einleitung der Stützkraft in den Deichselteil die Betätigungsabstützung und das Betätigungselement so gegeneinander bewegt werden, dass die Bremseinheit in Bremswirkung gespannt wird.

3. Auflaufbremsvorrichtung nach Anspruch 2,
**dadurch gekennzeichnet, dass** ohne Einleitung der Stützkraft in den Deichselteil und bei Einwirken einer Auflaufkraft zwischen Schubanhänger und Lenkfahrzeug auf den Deichselteil die Betätigungsabstützung und das Betätigungselement so gegeneinander bewegt werden, dass die Bremseinheit in Bremswirkung gespannt wird.

4. Auflaufbremsvorrichtung nach einem der vorhergehenden Ansprüche,
**dadurch gekennzeichnet, dass** der Wechsel zwischen Einleiten der Stützkraft auf den Deichselteil und Entfall dieser Stützkraft auf den Deichselteil eine Relativbewegung zwischen dem Deichselteil und dem lasttragenden Rahmengestell bewirkt.

5. Auflaufbremsvorrichtung nach einem der vorhergehenden Ansprüche,
**dadurch gekennzeichnet, dass** der Wechsel zwischen Einleiten der Stützkraft auf den Deichselteil und Einwirken einer Auflaufkraft zwischen Schubanhänger und Lenkfahrzeug auf den Deichselteil eine Relativbewegung zwischen dem Deichselteil und dem lasttragenden Rahmengestell bewirkt.

6. Auflaufbremsvorrichtung nach Anspruch 4 oder 5,
**dadurch gekennzeichnet, dass** das Bremsbetätigungselement eine Betätigungsabstützung und ein Betätigungselement umfasst, von denen das eine am dem lasttragenden Rahmengestell und das andere an dem Deichselteil befestigt ist und dass durch die Relativbewegung zwischen Rahmengestell (1) und Deichselteil die Betätigungsabstützung und das Betätigungselement relativ zueinander bewegt werden.

7. Auflaufbremsvorrichtung nach Anspruch 6,
**dadurch gekennzeichnet, dass** das Betätigungselement einen Befestigungspunkt für ein Zugelement eines Bowdenzuges (18) umfasst und die Betätigungsabstützung einen Befestigungspunkt für eine Hülle des Bowdenzuges umfasst.

8. Auflaufbremsvorrichtung nach einem der vorhergehenden Ansprüche,
**dadurch gekennzeichnet, dass** die Deichseleinheit über eine Schwenklagerung, insbesondere eine mittels doppelter Parallelogramm-Schwenklagerung, bei der die Schwingensysteme in einem Winkel zueinander verlaufen, ausgeführte Parallelogrammführung an dem lasttragenden Rahmengestell befestigt ist.

9. Auflaufbremsvorrichtung nach Anspruch 8,
**dadurch gekennzeichnet, dass** das Antriebsrad (2) an der Deichseleinheit befestigt und drehbar gelagert ist.

10. Auflaufbremsvorrichtung nach Anspruch 8, **dadurch gekennzeichnet, dass** das Antriebsrad (2) an dem Rahmengestell (1) befestigt und drehbar gelagert ist und mittels einer Drehmomentstütze (20) an der Deichseleinheit gegen das Antriebsdrehmoment abgestützt ist.

11. Auflaufbremsvorrichtung nach Anspruch 10,
**dadurch gekennzeichnet, dass** das die Drehmomentstütze (20) als Hebel ausgeführt ist, der eine Hebellänge aufweist, die kürzer ist als der Radius des Antriebsrades.

12. Auflaufbremsvorrichtung nach einem der vorhergehenden Ansprüche,
**dadurch gekennzeichnet, dass** das Bremsbetätigungselement ohne Einleitung der Stützkraft in den Deichselteil und bei Einwirken einer Auflaufkraft zwischen Schubanhänger und Lenkfahrzeug auf den Deichselteil eine Bremsbetätigungskraft auf die Bremseinheit ausübt und dass eine Einstellvorrichtung zur Einstellung eines Übersetzungsverhältnisses zwischen der Auflaufkraft und der Bremsbetätigungskraft bereitgestellt ist.

13. Auflaufbremsvorrichtung nach einem der vorhergehenden Ansprüche,
**dadurch gekennzeichnet, dass** die drehmomentschlüssige Kopplung zwischen dem Antriebsmotor und dem Antriebsrad mittels einer Reibrad-Gegenrad (24) Kraftkopplung ausgeführt ist und das Reibrad auf einer Wippe oder einem Schwenkhebel (25) gelagert ist, die durch die auf das Deichselteil wirkende Antriebsschubkraft mittels einer Hebelkraft solcherart verschwenkt wird, dass die Anpresskraft zwischen Reibrad und Gegenrad, insbesondere Antriebsrad, erhöht wird.

14. Auflaufbremsvorrichtung nach Anspruch 13,
**dadurch gekennzeichnet, dass** die Wippe beziehungsweise der Schwenkhebel (25) mit dem Deichselteil gekoppelt ist zum Verringern des Anpressdrucks zwischen Reibrad und Gegenrad bei Reduzierung der Antriebsschubkraft.

15. Schubanhänger mit einer Auflaufbremsvorrichtung nach einem der vorhergehenden Ansprüche, vorzugsweise mit
- genau einem Antriebsrad (2) und gegebenenfalls einem weiteren nicht angetriebenen Rad (3), das axial beabstandet zum Antriebsrad am Rahmengestell drehbar gelagert ist, wobei das zweite Ende der Deichseleinheit mit der Lagerung des Antriebsrades, insbesondere der Drehmomentstütze des Antriebsmotors verbunden ist, oder
- genau zwei axial voneinander beabstandeten Antriebsrädern, wobei das zweite Ende der Deichseleinheit als gegabeltes Ende ausgebildet ist und mit den Lagerungseinheiten beider Antriebsräder, insbesondere der Drehmomentstütze des jeweiligen Antriebsmotors verbunden ist.

## Claims

1. Overrun braking device for a push trailer, comprising
a drive motor (21) supported in the push trailer with a supporting force and torque-lockingly coupled to a drive wheel of the push trailer for transmitting a drive torque,
a drawbar (5) having a coupling device at a first end for coupling to the steering vehicle for transmitting a pushing force from the push trailer to a steering vehicle, and a second end opposite the first end coupled to the push trailer,
a brake unit acting on at least one wheel of the push trailer, which can be actuated by means of a brake actuating element,
**characterized in that**
the drawbar has a braking force-transmitting drawbar part which is movable with respect to a load-bearing frame of the push trailer, and **in that** the supporting force of the drive motor counteracting the drive torque at the drive wheel is introduced into this movable braking force-transmitting drawbar part of the drawbar in the pushing direction of the push trailer and acts on the brake actuating element.

2. Overrun braking device according to claim 1,
**characterized in that** the brake actuating member comprises an actuating support and an actuating member, one of which is fixed to the load-bearing frame member and the other of which is fixed to the drawbar part, and **in that**
- by the introduction of the supporting force into the drawbar part, the actuating support and the actuating element are moved against each other in such a way that the brake unit is released, and
- without introducing the supporting force into the drawbar part, the actuating support and the actuating element are moved against each other in such a way that the brake unit is tensioned in braking action.

3. Overrun braking device according to claim 2,
**characterized in that** without introducing the supporting force into the drawbar part and when an overrun force between the push trailer and the steering vehicle acts on the drawbar part, the actuating support and the actuating element are moved against each other in such a way that the brake unit is tensioned in braking action.

4. Overrun braking device according to any one of the preceding claims,
**characterized in that** the alternation between the introduction of the supporting force on the drawbar part and the removal of this supporting force on the drawbar part causes a relative movement between the drawbar part and the load-bearing frame.

5. Overrun braking device according to any one of the preceding claims,
**characterized in that** the alternation between the introduction of the supporting force on the drawbar part and the action of an overrun force between the push trailer and the steering vehicle on the drawbar part causes a relative movement between the drawbar part and the load-bearing frame.

6. Overrun braking device according to claim 4 or 5,
**characterized in that** the brake actuating element comprises an actuating support and an actuating element, one of which is fixed to the load-bearing frame member and the other of which is fixed to the drawbar part, and **in that** the relative movement between the frame member (1) and the drawbar part moves the actuating support and the actuating element relative to each other.

7. Overrun braking device according to claim 6,
**characterized in that** the actuating element comprises an attachment point for a traction element of a Bowden cable (18) and the actuating support comprises an attachment point for a sheath of the Bowden cable.

8. Overrun braking device according to any one of the preceding claims,
**characterized in that** the drawbar unit is fastened to the load-bearing frame via a swivel bearing, in particular a parallelogram guide designed by means of a double parallelogram swivel bearing, in which the swivel systems run at an angle to one another.

9. Overrun braking device according to claim 8,
**characterized in that** the drive wheel (2) is attached to the drawbar part and is rotatably mounted.

10. Overrun braking device according to claim 8,
**characterized in that** the drive wheel (2) is fixed and rotatably mounted on the frame (1) and is supported against the drive torque by means of a torque support (20) on the drawbar part.

11. Overrun braking device according to claim 10,
**characterized in that** the torque arm (20) is designed as a lever having a lever length shorter than the radius of the drive wheel.

12. An overrun braking device according to any one of the preceding claims,
**characterized in that** the brake actuating member exerts a brake actuating force on the brake unit without introducing the supporting force into the drawbar part and when an overrun force is applied to the drawbar part between the push trailer and the steering vehicle, and **in that** an adjusting device for adjusting a transmission ratio between the overrun force and the brake actuating force is provided.

13. Overrun braking device according to any one of the preceding claims,
**characterized in that** the torque-locking coupling between the drive motor and the drive wheel is implemented by means of a friction wheel-counterwheel (24) force coupling, and the friction wheel is mounted on a rocker or a pivoted lever (25) which is pivoted by the drive thrust acting on the drawbar part by means of a lever force in such a way that the contact pressure between the friction wheel and the counterwheel, in particular the drive wheel, is increased.

14. Overrun braking device according to claim 13,
**characterized in that** the rocker or the pivoted fever (25) is coupled to the drawbar part for reducing the contact pressure between the friction wheel and the counter wheel when the drive thrust is reduced.

15. Push trailer with an overrun braking device according to any of the preceding claims, preferably with
- exactly one drive wheel (2) and, if necessary, a further non-driven wheel (3), which is rotatably mounted on the frame at an axial distance from the drive wheel, the second end of the drawbar part being connected to the mounting of the drive wheel, in particular the torque support of the drive motor, or
- exactly two axially spaced drive wheels, the second end of the drawbar part being designed as a forked end and being connected to the bearing units of both drive wheels, in particular to the torque support of the respective drive motor.

## Revendications

1. Dispositif de frein à inertie pour une remorque de poussée, comprenant
un moteur d'entraînement (21), qui est soutenu dans la remorque de poussée avec une force de support et est couplé par complémentarité de couple de rotation à une roue d'entraînement de la remorque de poussée pour transmettre un couple de rotation d'entraînement,
un timon (5),
qui présente, pour transmettre une force de poussée depuis la remorque de poussée sur un véhicule de direction sur une première extrémité, un dispositif de couplage devant être accouplé au véhicule de direction et est couplé par une deuxième extrémité faisant face à la première extrémité à la remorque de poussée,
une unité de freinage agissant sur au moins une roue de la remorque de poussée, qui peut être actionnée au moyen d'un élément d'actionnement de frein,
**caractérisé en ce que**
le timon présente une partie de timon de transmission de force de freinage mobile par rapport à un châssis porteur de charges de la remorque de poussée, et que la force de support, contrecarrant le couple de rotation d'entraînement sur la roue d'entraînement, du moteur d'entraînement est appliquée dans la direction de poussée de la remorque de poussée dans ladite partie de timon de transmission de force de freinage mobile du timon et agit sur l'élément d'actionnement de frein.

2. Dispositif de frein à inertie selon la revendication 1,
**caractérisé en ce que** l'élément d'actionnement de frein comprend un soutien d'actionnement et un élément d'actionnement, dont un de ces éléments est fixé sur le châssis porteur de charges et l'autre est fixé sur la partie de timon, et **en ce que**
- le soutien d'actionnement et l'élément d'actionnement sont déplacés l'un à l'encontre de l'autre par l'application de la force de support dans la partie de timon de telle sorte que l'unité de freinage est déclenchée, et
- le soutien d'actionnement et l'élément d'actionnement sont déplacés l'un à l'encontre de l'autre sans application de la force de support dans la partie de timon de telle sorte que l'unité de freinage est serrée dans l'action de freinage.

3. Dispositif de frein à inertie selon la revendication 2,
**caractérisé en ce que** le soutien d'actionnement et l'élément d'actionnement sont déplacés l'un à l'encontre de l'autre sans application de la force de support dans la partie de timon et lors de l'action d'une force d'inertie entre la remorque de poussée et le véhicule de direction sur la partie de timon de telle sorte que l'unité de freinage est serrée dans l'action de freinage.

4. Dispositif de frein à inertie selon l'une quelconque des revendications précédentes,
**caractérisé en ce que** le changement entre l'application de la force de support sur la partie de timon et la suppression de ladite force de support sur la partie de timon entraîne un déplacement relatif entre la partie de timon et le châssis porteur de charges.

5. Dispositif de frein à inertie selon l'une quelconque des revendications précédentes,
**caractérisé en ce que** le changement entre l'application de la force de support sur la partie de timon et l'action d'une force d'inertie entre la remorque de poussée et le véhicule de direction sur la partie de timon entraîne un déplacement relatif entre la partie de timon et le châssis porteur de charges.

6. Dispositif de frein à inertie selon la revendication 4 ou 5,
**caractérisé en ce que** l'élément d'actionnement de frein comprend un soutien d'actionnement et un élément d'actionnement, dont un élément est fixé sur le châssis porteur de charges et l'autre est fixé sur la partie de timon, et que le soutien d'actionnement et l'élément d'actionnement sont déplacés l'un par rapport à l'autre par le déplacement relatif entre le châssis (1) et la partie de timon.

7. Dispositif de frein à inertie selon la revendication 6,
**caractérisé en ce que** l'élément d'actionnement comprend un point de fixation pour un élément de traction d'un câble Bowden (18), et le soutien d'actionnement comprend un point de fixation pour une gaine du câble Bowden.

8. Dispositif de frein à inertie selon l'une quelconque des revendications précédentes,
**caractérisé en ce que** l'unité de timon est fixée sur le châssis porteur de charges par l'intermédiaire d'un palier de pivotement, en particulier une coulisse en parallélogramme réalisée au moyen d'un double palier de pivotement en parallélogramme, où les systèmes oscillants s'étendent les uns par rapport aux autres selon un angle.

9. Dispositif de frein à inertie selon la revendication 8,
**caractérisé en ce que** la roue d'entraînement (2) est fixée et est montée de manière à pouvoir tourner sur l'unité de timon.

10. Dispositif de frein à inertie selon la revendication 8,
**caractérisé en ce que** la roue d'entraînement (2) est fixée et est montée de manière à pouvoir tourner sur le châssis (1) et est soutenue à l'encontre du couple de rotation d'entraînement au moyen d'un support de couple de rotation (20) sur l'unité de timon.

11. Dispositif de frein à inertie selon la revendication 10,
**caractérisé en ce que** le support de couple de rotation (20) est réalisé en tant que levier, qui présente une longueur de levier qui est plus courte que le rayon de la roue d'entraînement.

12. Dispositif de frein à inertie selon l'une quelconque des revendications précédentes,
**caractérisé en ce que** l'élément d'actionnement de frein exerce une force d'actionnement de frein sur l'unité de freinage sans application de la force de support dans la partie de timon et lors de l'action d'une force d'inertie entre la remorque de poussée et le véhicule de direction sur la partie de timon, et qu'un dispositif de réglage est fourni pour régler un rapport de démultiplication entre la force d'inertie et la force d'actionnement de frein.

13. Dispositif de frein à inertie selon l'une quelconque des revendications précédentes,
**caractérisé en ce que** le couplage par complémentarité de couple de rotation entre le moteur d'entraînement et la roue d'entraînement est réalisé au moyen d'une contre-roue de roue de friction (24), et la roue de friction est montée sur une bascule ou un levier de pivotement (25), qui sont pivotés par la force de poussée d'entraînement agissant sur la partie de timon au moyen d'une force de levier de telle manière que la force de compression entre la roue de friction et la contre-roue, en particulier la roue d'entraînement, est augmentée.

14. Dispositif de frein à inertie selon la revendication 13,
**caractérisé en ce que** la bascule ou le levier de pivotement (25) sont couplés à la partie de timon pour réduire la pression de compression entre la force de friction et la contre-roue lors de la réduction de la force de poussée d'entraînement.

15. Remorque de poussée avec un dispositif de frein à inertie selon l'une quelconque des revendications précédentes, de préférence avec
- précisément une roue d'entraînement (2) et éventuellement une autre roue (3) non entraînée, qui est montée de manière à pouvoir tourner sur le châssis à distance axialement par rapport à la roue d'entraînement, dans lequel la seconde extrémité de l'unité de timon est reliée au palier de la roue d'entraînement, en particulier au support de couple de rotation du moteur d'entraînement, ou
- précisément deux roues d'entraînement tenues à distance axialement l'une de l'autre, dans lequel la seconde extrémité de l'unité de timon est réalisée en tant qu'extrémité en fourche et est reliée aux unités de palier de deux roues d'entraînement, en particulier au support de couple de rotation du moteur d'entraînement respectif.
